# EUROPÄISCHE PATENTSCHRIFT

(11) **EP 0 546 991 B1**
(45) Veröffentlichungstag und Bekanntmachung des Hinweises auf die Patenterteilung: **18.09.1996**
(21) Anmeldenummer: 92810919.8
(22) Anmeldetag: 26.11.1992
(51) Int. Cl.: B65D 5/74, B65D 17/40, B29C 45/16, B29C 45/00

(54) **Verschlusseinheit eines Gebindes für fliessfähiges Gut**
Closure assembly for a container for free-flowing products
Ensemble de fermeture d'un emballage de produit fluide

(30) Priorität: 12.12.1991 CH 3684/91; 12.12.1991 CH 3685/91; 12.12.1991 CH 3689/91
(43) Veröffentlichungstag der Anmeldung: 16.06.1993
(73) Patentinhaber: Tetra Laval Holdings & Finance SA, 1009 Pully (CH)
(72) Erfinder: Mock, Elmar, CH-2504 Biel/Bienne (CH)
(74) Vertreter: Frei, Alexandra Sarah

(56) Entgegenhaltungen:
- EP-A- 0 224 593
- EP-A- 0 268 690

## Beschreibung

Die Erfindung liegt auf dem Gebiete der Verpackungsindustrie und betrifft eine Verschlusseinheit und ein Herstellungsverfahren derselben gemäss den Oberbegriffen der entsprechenden unabhängigen Patentansprüche.

An Gebinden für Flüssigkeiten wie beispielsweise Metalldosen oder Behälter aus beschichtetem Karton werden für eine wiederverschliessbare Öffnung und für ein bequemes Ausgiessen oft Verschlusseinheiten, vorzugsweise aus Kunststoff, bestehend aus einem Ausgussteil mit einer Ausgussöffnung und einem die Ausgussöffnung des Ausgussteils verschliessenden Verschlussteil eingesetzt, die in einer Öffnung des Gebindes angebracht werden. Die beiden schweizerischen Patentanmeldungen Nr. 2740/91 und 2739/91 (Anmeldedatum 17.9.91) derselben Anmelderin beschreiben derartige Verschlusseinheiten. Die beschriebenen Verschlusseinheiten werden nach einem Mehrmaterialien-Spritzgussverfahren gegossen und bestehen aus mindestens zwei, sich in mindestens einer Eigenschaft unterscheidenden Materialien. Weitere Verschlusseinheiten die aus einem oder mehreren Materialien bestehen, werden in der Schrift EP-224593 und in der nicht vorveröffentlichten Schrift WO 93/05945 offenbart.

In der genannten Anmeldung Nr. 2740/91 wird für einen problemlosen Transport gefordert, dass die Verschlusseinheit derart ausgebildet sei, dass sie speziell vor dem ersten Öffnen einen strapaziösen Transport schadlos überstehen kann, dass sie sich aber beim ersten Öffnen trotzdem mit wenig Kraftaufwand öffnen lässt. Als Zusatzsicherung des Neuzustandes wird eine Sollbruchstelle zwischen Ausgussteil und Verschlussteil vorgeschlagen, die beim ersten Öffnen aufgebrochen wird. Diese Sollbruchstelle läuft zwischen Verschlussteil und Ausgussteil um mindestens einen Teil des Umfanges der Ausgussöffnung und zwar in einem der aus einem Material bestehenden Bereich, der sich in Verschlussteil und Ausgussteil erstreckt. Es handelt sich dabei um eine linienförmige Zone, in der das Material sehr dünn ist.

Auch bekannte Verschlusseinheiten, die aus *einem* Material gegossen sind, können derartige Sollbruchstellen aufweisen. Solche Verschlusseinheiten werden in einem pseudo-geschlossenen Zustand gegossen, das heisst, dass der Verschlussteil über eine Sollbruchstelle am Ausgussteil angeformt ist. Beim ersten Öffnen wird der Verschlussteil entlang der Sollbruchstelle vom Ausgussteil getrennt. Da die gebrochene Sollbruchstelle beim Wiederverschliessen als Dichtfläche nicht genügt, muss der Verschlussteil beim Wiederverschliessen in einen weiteren geschlossenen Zustand gebracht werden, der meist darin besteht, dass der Verschlussteil tiefer über den Ausgussteil gestossen wird. Die Sollbruchstelle liegt im Neuzustand (pseudo-geschlossener Zustand) direkt an der Aussenoberfläche der Verschlusseinheit und stellt eine leicht verletzbare Stelle dar.

Es ist nun die Aufgabe der Erfindung, eine Verschlusseinheit gemäß EP-A-224593 zu schaffen, die im Neuzustand durch eine Sollbruchstelle zwischen Ausgussteil und Verschlussteil eine zusätzliche Sicherung hat, deren geschlossener Zustand aber im Neuzustand und im wiederverschlossenen Zustand derselbe ist (kein pseudo-geschlossener Zustand), und die im wiederverschlossenen Zustand durch Dichtflächen (nicht Dichtkanten) abgedichtet ist. Dabei soll die Sollbruchstelle gegenüber bekannten derartigen Sollbruchstellen verbessert werden und zwar in Bezug auf ihre Exponiertheit, auf ihre Empfindlichkeit gegenüber Kräften, die anders gerichtet sind als die zum Öffnen der Verschlusseinheit notwendigen Kräfte und/oder in Bezug auf Hilfsmittel, mit deren Hilfe die Sollbruchstelle exakt positioniert und die für ein Aufbrechen notwendige Kraft beschränkt werden kann.

Diese Aufgabe wird gelöst durch die Verschlusseinheit und durch das Herstellungsverfahren für die Verschlusseinheit, wie sie in den Patentansprüchen definiert sind.

Die erfindungsgemässe Verschlusseinheit wird nach der Mehrmaterialien-Spritzgusstechnik aus mindestens zwei thermoplastischen Kunststoffmaterialien hergestellt, die sich in mindestens einer Eigenschaft unterscheiden. Mindestens ein Bereich bestehend aus einem der Materialien reicht dabei vom Ausgussteil in den Verschlussteil und kann am Übergang eine Sollbruchstelle bilden. An den die Sollbruchstelle aufweisenden Bereich schliesst vorteilhafterweise auf der äusseren Seite der Verschlusseinheit ein Bereich aus einem anderen Material eng an, der als Schutz/Stütz-Zone über die Sollbruchstelle reicht und vorteilhafterweise auf der verschlussteilseitigen Seite der Sollbruchstelle fest mit dem die Sollbruchstelle aufweisenden Bereich verbunden ist, auf der ausgussteilseitigen Seite der Sollbruchstelle aber nicht oder nur sehr wenig am die Sollbruchstelle aufweisenden Bereich haftet, derart, dass in diesem Bereich zwischen Ausgussteil und Verschlussteil ein trennbares Dichtflächenpaar entsteht.

Die beschriebene Schutz/Stütz-Zone kann sich auch auf der inneren Seite der Verschlusseinheit befinden, wodurch sie aber nur eine sehr beschränkte Schutzfunktion übernehmen kann.

Die beschriebene äussere Schutz/Stütz-Zone kann ergänzt werden durch eine gleiche Schutz/Stütz-Zone auf der Innenseite der Verschlusseinheit oder durch eine bzw. zwei Stütz-Zonen, die ausgussteilseitig und/oder verschlussteilseitig eng am den die Sollbruchstelle aufweisenden Bereich anliegend und fest mit diesem verbunden so nahe wie möglich an die Sollbruchstelle reichen, diese aber nicht überdecken.

Durch die beschriebenen Schutz/Stütz-Zonen und Stütz-Zonen wird die Sollbruchstelle gegen Verletzung geschützt und derart gestützt, dass sie beispielsweise durch äusseren Druck auf den Verschlussteil, durch Druck im Inneren des Behälters oder durch seitlich auf die Verschlusseinheit wirkende Kräfte nicht aufgebrochen werden kann.

Die erfindungsgemässe Verschlusseinheit weist ein die Ausgussöffnung begrenzendes Scharnier auf, das eine permanente, begrenzt schwenkbare Verbindung zwischen Verschlussteil und Ausgussteil darstellt, die Sollbruchstelle ersteckt sich nur teilweise um den Umfang der Ausgussöffnung.

Das Scharnier besteht aus einer den Verschlussteil schwenkbar mit dem Ausgussteil verbindenden dünnen Materialstelle. Dieses Scharnier stellt eine Fortsetzung der Sollbruchstelle dar, derart, dass Sollbruchstelle und flexible Verbindungsstelle eine in sich geschlossene Linie um die Ausgussöffnung bilden. Damit beim Aufreissen der Sollbruchstelle und bei darauf folgenden Öffnungsvorgängen die Sollbruchstelle sich nicht durch Propagation von Rissen in die Verbindungsstelle verlängert, müssen in den Sollbruchstellen-Endzonen spezielle Vorkehrungen getroffen werden.

Der Materialbereich, der vom Ausgussteil in den Verschlussteil reicht und in dem die Sollbruchstelle vorgesehen ist, kann derart ausgestaltet sein, dass er, mindestens im geschlossenen Zustand der Verschlusseinheit ihre ganze Innenoberfläche darstellt. Dies ist dann vorteilhaft wenn das zweite Material mit dem Inhalt des Gebindes nicht verträglich ist. In einem solchen Fall sind nur auf der Aussenseite Schutz/Stütz-Zonen möglich.

Einige beispielhafte Ausführungsformen der erfindungsgemässen Verschlusseinheit werden anhand der folgenden Figuren detailliert beschrieben. Dabei zeigen:
- **Figur 1**: einen Schnitt durch eine beispielhafte Ausführungsform der erfindungsgemässen Verschlusseinheit mit Schier und äusserer und innerer Schutz/Stütz-Zone (mit Schnittebene senkrecht zur Schwenkachse des Scharniers);
- **Figur 2**: eine weitere Ausführungsform mit nur innerer Schutz/Stütz-Zone;
- **Figur 3**: die Sollbruchstelle der Ausführungsform gemäss Figur 1 als vergrössertes Detail;
- **Figur 4**: die Sollbruchstelle der Ausführungsform gemäss Figur 2 als vergrössertes Detail;
- **Figur 5**: eine weitere Ausführungsform der Sollbruchstelle für eine erfindungsgemässe Verschlusseinheit;
- **Figur 6**: eine weitere Ausführungsform der Sollbruchstelle für eine erfindungsgemässe Verschlusseinheit;
- **Figuren 7a und 7b**: die Herstellung einer erfindungsgemässen Verschlusseinheit mit einer Sollbruchstelle gemäss Figur 6 in zwei Giessstufen (Giessen des ersten Materials: Figur 7a, Giessen des zweiten Materials: Figur 7b).
- **Figuren 8a und 8b**: die Herstellung einer erfindungsgemässen Verschlusseinheit mit einer Sollbruchstelle gemäss Figur 4 in zwei Giessstufen (Giessen des ersten Materials: Figur 8a, Giessen des zweiten Materials: Figur 8b);
- **Figur 9**: eine Ausführungsform der erfindungsgemässen Verschlusseinheit als Schnitt in der Ebene der Ausgussöffnung mit einer Sollbruchstelle und an diese anschliessende dünne Verbindungsstelle zwischen Verschlussteil und Ausgussteil;
- **Figur 10**: die Sollbruchstellenendzonen der Ausführungsform gemäss Figur 9;
- **Figur 11**: eine weitere Ausführungsform der erfindungsgemässen Verschlusseinheit mit nur einer äusseren Schutz/Stütz-Zone im Schnitt wie Figur 1;
- **Figur 12**: ein Detail der Scharnierzone der Ausführungsform gemäss Figur 12.

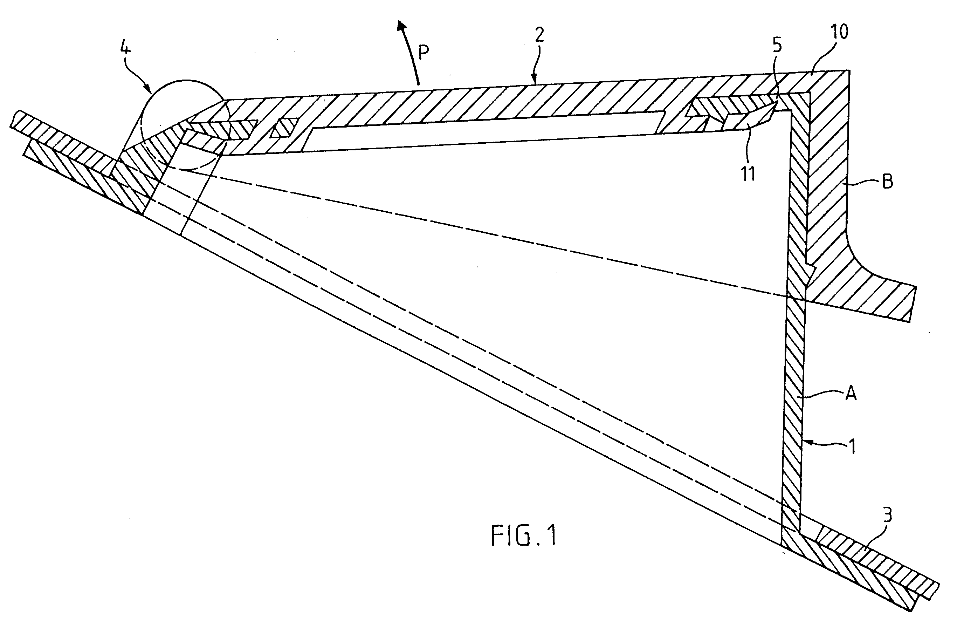

**Figur 1** zeigt einen Schnitt durch eine beispielhafte Ausführungsform einer erfindungsgemässen Verschlusseinheit. Sie besteht aus einem Ausgussteil 1 und einem Verschlussteil 2, die begrenzt schwenkbar miteinander verbunden sind durch ein Scharnier 4. Die Verschlusseinheit ist in einer Öffnung eines Gebindes 3 angebracht. Die Verschlusseinheit besteht aus mindestens zwei zusammenhängenden Bereichen aus je einem Material A bzw. B, von denen mindestens der eine sich sowohl im Ausgussteil 1 als auch im Verschlussteil 2 erstreckt. Dieser Bereich weist am Übergang zwischen Ausgussteil und Verschlussteil eine Sollbruchstelle 5 auf, die sich mindestens teilweise um den inneren Umfang der Ausgussöffnung erstreckt. Es handelt sich dabei um eine schmale Zone, in der das Material sehr dünn ist. Die dargestellte Sollbruchstelle weist sowohl auf der Aussenseite als auch auf der Innenseite der Verschlusseinheit Zonen (10 und 11) eines zweiten Materials B auf, die die Sollbruchstelle schützen und stützen und die weiter entfernt von der Sollbruchstelle zusammen mit dem die Sollbruchstelle aufweisenden Bereich trennbare Dichtflächenpaare bilden können.

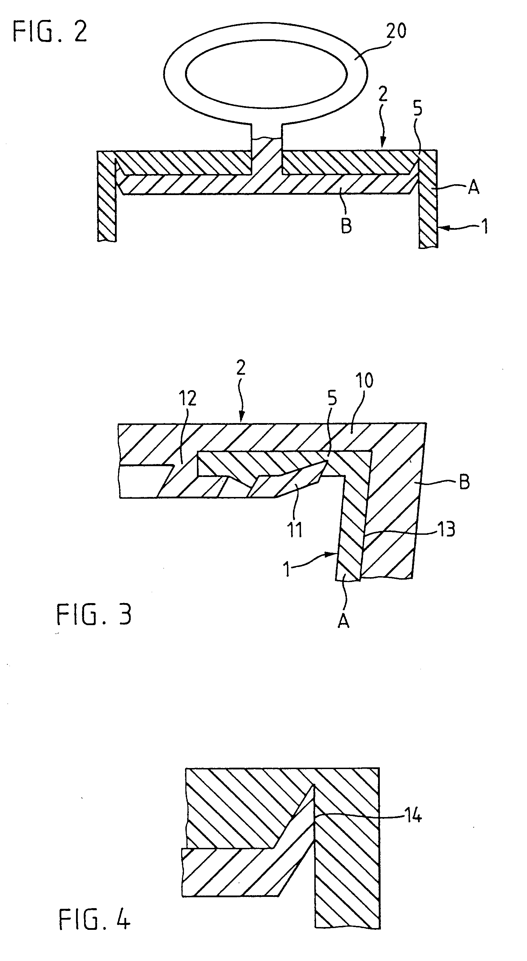

**Figur 2** zeigt nun eine weitere Ausführungsform der erfindungsgemässen Verschlusseinheit, die ebenfalls aus zwei Materialien A und B besteht, wobei der Bereich des Materiales A vom Ausgussteil 1 in den Verschlussteil 2 reicht und eine Sollbruchstelle 5 aufweist. Im Unterschied zur in der Figur 1 dargestellten Ausführungsform besitzt diese nur auf der Innenseite der Verschlusseinheit eine Zone des Materials B, die die Sollbruchstelle 5 stützt. Damit der Verschlussteil trotzdem vom Ausgussteil abgehoben werden kann, ist er beispielsweise mit einer Lasche 20 versehen.

**Figur 3** zeigt nun die Sollbruchstelle gemäss Figur 1 im Detail. Der Bereich aus dem einen Material A weist am Übergang vom Ausgussteil 1 zum Verschlussteil 2 eine Zone dünnen Materials auf, die sich linienförmig entlang dem inneren Umfang der Ausgussöffnung erstreckt und die Sollbruchstelle 5 bildet. An diese Sollbruchstelle 5 und mindestens ihre nähere Umgebung schliesst sich auf der äusseren Seite der Verschlusseinheit eine Schutz/Stütz-Zone 10 aus einem weiteren Material B eng an, die auf der verschlussteilseitigen Seite der Sollbruchstelle beispielsweise durch Formschlussmittel 12 fest mit dem die Sollbruchstelle aufweisenden Bereich verbunden ist. Diese Schutz/Stütz-Zone ist auf der ausgussteilseitigen Seite der Sollbruchstelle nicht mit dem die sollbruchstelle aufweisenden Bereich verbunden sondern bildet mit diesem zusammen ein trennbares Dichtflächenpaar 13.

**Figur 4** zeigt im Detail die Sollbruchstelle der Ausführungsform gemäss Figur 2. Im Unterschied zu der in der Figur 3 dargestellten äusseren Dichtflächenpaar 13 auf der Aussenseite der Wandung der Ausgussöffnung, weist diese Ausführungsform eine innere Dichtfläche 14 auf der Innenseite der Wandung der Ausgussöffnung auf.

Zum Aufbrechen der Sollbruchstelle kann nun eine Kraft an der äusseren Schutz/Stütz-Zone 10 (Figur 1 oder 3) angreifen, und zwar ausgussteilseitig, wo diese nicht oder nur sehr wenig an dem die Sollbruchstelle aufweisenden Bereich haftet. Wie aus der Figur 1 ersichtlich, ist eben eine derartige Kraft (Pfeil P) notwendig, um den Verschlussteil in eine geöffnete Position zu schwenken. Bei einer derartigen Bewegung wird bei noch intakter Sollbruchstelle diese gebrochen, wobei der ganze Bereich aus dem Material B und der verschlussteilseitige Teil des Bereiches aus dem Material A bewegt werden.

Die äussere Schutz/Stütz-Zone 10 kann auf der Innenseite der Verschlusseinheit ergänzt werden beispielsweise durch eine Stütz-Zone 11, die wie in den Figuren 1 und 3 dargestellt ein Teil des aus dem Material B bestehenden Bereiches sein kann oder ein Teil eines Bereiches aus einem weiteren Material. Diese Stütz-Zone 11 ist ebenfalls fest mit dem die Sollbruchstelle aufweisenden Bereich verbunden, beispielsweise durch Formschlussmittel 12, und reicht verschlussteilseitig möglichst nahe an die Sollbruchstelle heran, beispielsweise wie in der Figur 3 dargestellt bis unmittelbar in die Sollbruchstelle. Diese Stütz-Zone 11 übernimmt eine weitere Stützfunktion und verhindert zusammen mit der Schutz/Stütz-Zone 10 auf der äusseren Seite der Sollbruchstelle, dass Zonen unmittelbar neben der Sollbruchstelle bei deren Aufbrechen deformiert oder angerissen werden können, und trägt dadurch zu einer genauen Lokalisierung der Sollbruchstelle und zu einer Einschränkung der für das Aufbrechen der Sollbruchstelle notwendigen Kraft bei.

Varianten zu der in der Figur 3 dargestellten Ausführungsform der Sollbruchstelle bestehen darin, dass auf der Innenseite der Verschlusseinheit anstelle der einseitigen Stütz-Zone ebenfalls eine die Sollbruchstelle überdeckende Schutz/Stütz-Zone vorgesehen ist oder dass auf der Innenseite der Verschlusseinheit sowohl verschlussteilseitig als auch ausgussteilseitig eine Stütz-Zone vorgesehen ist.

Weitere Varianten bestehen darin, dass die Schutz/Stütz-Zone 10 und/oder die Stütz-Zone 11 nicht durch Formschlussmittel 12, sondern durch Verschmelzung der Oberflächen oder durch ein entsprechendes Bindemittel mit dem die Sollbruchstelle aufweisenden Bereich fest verbunden sind.

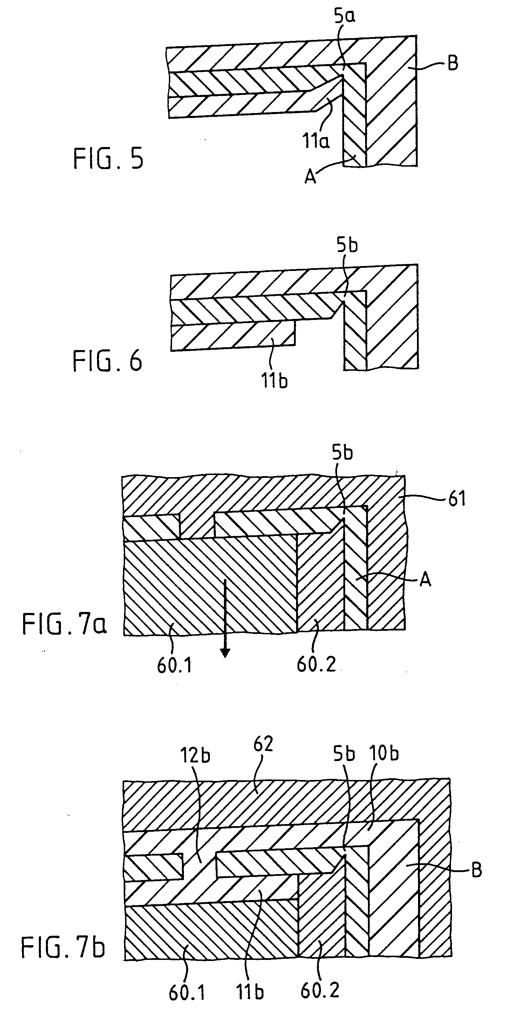

Alle diese Verbindungsmittel zwischen den Bereichen aus verschiedenen Materialien können mit dem Mehrmaterialien-Spritzgussverfahren leicht hergestellt werden. Dabei wird aus einem ersten Material A ein Vorspritzling gegossen, der vorteilhafterweise die Sollbruchstelle aufweist. Dann werden die für des Giessen des Vorspritzlings gebrauchten Giessformen wenigstens teilweise bewegt oder entfernt und durch andere ersetzt und mit einem Material B der fertige Giessteil gegossen, wobei der Vorspritzling wenigstens teilweise als Giessform dient. Giessstufen mit weiteren Materialien können angeschlossen werden. Je nach Materialpaarung und je nach Temperaturführung bei Giessen des zweiten Materials sind die aneinandergegossenen Oberflächen mehr oder weniger miteinander verschmolzen und haften so mehr oder weniger aneinander. Formschlussmittel zur festen Verbindung der Bereiche aus den verschiedenen Materialien lassen sich durch entsprechende geometrische Formgebung der Bereiche erstellen (siehe auch Figuren 7a und 7b). Zwischen einzelnen Giessstufen kann auch ein Bindemittel auf Teiloberflächen des bereits gegossenen Stückes aufgebracht werden, die zu einer Haftung zwischen den Bereichen führen.

Die Sollbruchstelle ist eine Stelle, an der das Material sehr dünn ist. Sie ist auch bereits während dem Giessverfahren sehr empfindlich und an sich wenig stabil. Soll sie nun in einer weiteren Giessstufe beidseitig von einem weiteren Material umgossen werden, müssen die Giessformen beidseitig von der Sollbruchstelle entfernt werden, sodass sie stabil genug sein muss, um den Bereich stabil zu halten. Es zeigt sich nun, dass die Sollbruchstelle dünner gestaltet werden kann, wenn sie beim Umgiessen mit anderem Material einseitig wenigstens teilweise durch einen stationären Giessformteil gestützt werden kann, das heisst mit anderen Worten, wenn sie wenigstens auf der einen Seite nicht vollständig von einer Zone eines weiteren Materials überdeckt ist. Für eine weitere Erläuterung dazu dienen neben der Figur 3 die Figuren 5 bis 8, die weitere Ausführungsformen von erfindungsgemässen Verschlusseinheiten mit Sollbruchstellen und eine schematische Darstellung ihrer Herstellung zeigen.

Die Sollbruchstelle 5 gemäss Figur 3 ist auf der äusseren Seite der Verschlusseinheit ganz, auf der inneren Seite der Verschlusseinheit nur verschlussteilseitig von einer Schutz- und/oder Stütz-Zone bedeckt. Sie ist innen ausgussteilseitig nicht bedeckt, das heisst, die für diesen Bereich benützte Giessform muss für die Giessstufe des Materials B nicht entfernt werden und kann die Stützung der Sollbruchstelle übernehmen.

**Figur 5** zeigt eine Sollbruchstelle 5a, die auch auf der Innenseite der Verschlusseinheit allseitig von einer Schutz/Stütz-Zone 11a überdeckt ist, sodass bei Giessen dieser Zonen aus dem Material B keine Giessform die Sollbruchstelle stützen kann.

Es zeigt sich, dass eine Sollbruchstelle 5b gemäss **Figur 6** für die Herstellung optimal ist. Da die Sollbruchstelle 5b und ihre unmittelbare Umgebung auf der Innenseite der Verschlusseinheit nicht von einer Stütz-Zone 11b bedeckt sind, können sie beim Giessen des Materials B durch eine Giessform gestützt werden, wie dies mit Hilfe der Figuren 7a und 7b gezeigt werden soll.

**Figur 7a** zeigt die Giessstufe des Materials A zum Giessen eines Vorspritzlings, der die Sollbruchstelle 5b aufweist. Für diese Giessstufe wird eine aus zwei Teilen bestehende, innere Giessform (60.1 und 60.2) verwendet und eine äussere Giessform 61.

**Figur 7b** zeigt die Giessstufe des Materials B, wobei unter anderem die Schutz/Stütz-Zone 10b und die Stütz-Zone 11b gegossen werden. Da die Stütz-Zone die Sollbruchstelle 5b und ihre direkte Umgebung nicht überdecken soll, ist es möglich, die innere Giessform 60.2 während beiden Giessstufen stationär zu lassen, sodass sie die Sollbruchstelle stützen kann, während die innere Giessform 60.1 verschoben und die Giessform 61 durch die Giessform 62 ersetzt werden muss. Es wird dadurch möglich, bedeutend dünnere Sollbruchstellen zu giessen.

Aus den Figuren 7a und 7b ist auch ersichtlich, dass die Formschlussmittel 12b zur festen Verbindung der beiden Bereiche einfach hergestellt werden können.

Sollte eine innere Stütz-Zone wie in der Figur 6 dargestellt den Anforderungen nicht genügen, besteht auch die Möglichkeit, die innere Stütz-Zone in einer ersten Giessstufe zu giessen, in einer zweiten die Sollbruchstelle und in einer dritten die äussere Schutz/Stütz-Zone. Dabei wird die Sollbruchstelle in der dritten Giessstufe durch die innere Stütz-Zone gestützt.

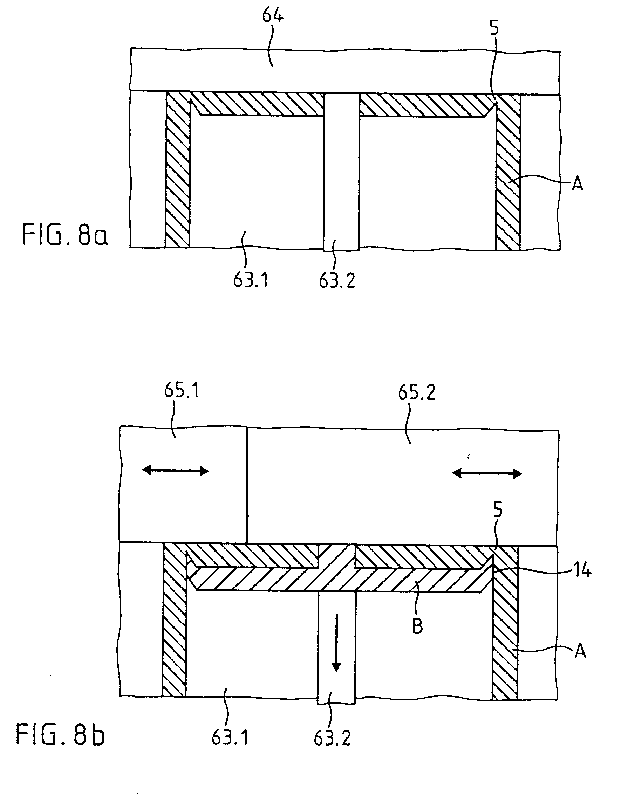

**Figuren 8a und 8b** zeigen in analoger Weise wie die Figuren 7a und 7b die Herstellung einer Sollbruchstelle gemäss Figur 4. In einer ersten Giessstufe (Figur 8a) wird der die Sollbruchstelle 5 aufweisende Bereich aus dem Material A (Vorspritzling) gegossen, und zwar mit den Giessformen 63.1, 63.2 und 64. Für die zweite Giessstufe werden die Giessformen 63.1 und 63.2 vom Vorspritzling weg bewegt, die Giessform 64 durch die Giessformen 65.1 und 65.2 (seitlich wegen der Lasche) ersetzt. Die Sollbruchstelle 5 ist zwischen den beiden Gissstufen zeitweise nur einseitig oder gar nicht gestützt, kann aber durch das Material B nicht aus ihrer Form gedrückt werden, da sie während der zweiten Giessstufe durch die Giessformen 65.1 und 65.2 gestützt ist.

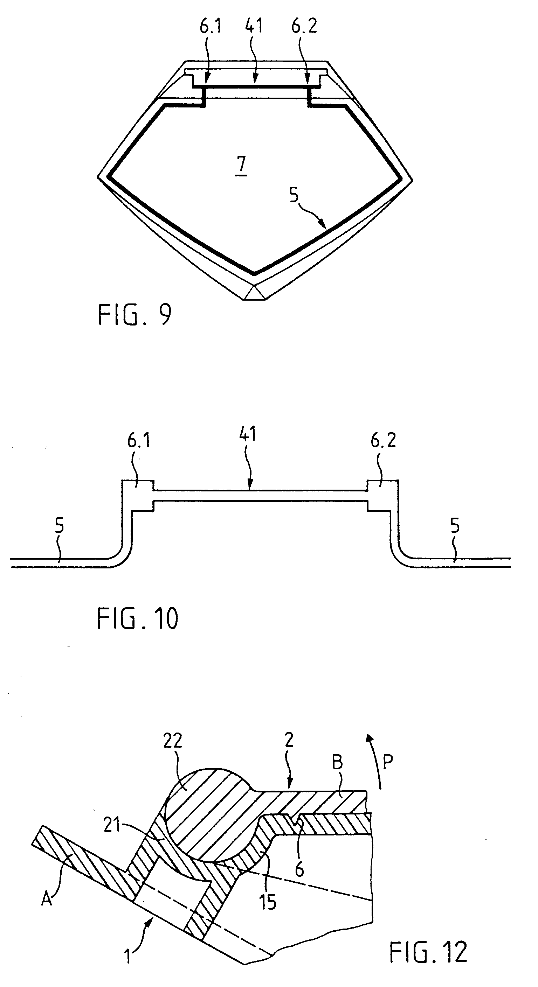

**Figur 9** zeigt einen Schnitt durch eine erfindungsgemässe Verschlusseinheit gemäss Figur 1, wobei in der Schnittfläche die Ausgussöffnung 7 liegt, also auch die Sollbruchstelle 5 und, wenn diese nicht rund um die Ausgussöffnung reicht, eine Scharnierzone 41, die beispielsweise aus einer schmalen Stelle besteht, in der das Material dünn und damit flexibel ist. In diesem Falle bilden eine schmale Zone dünnen Materials, die als Sollbruchstelle 5 vorgesehen ist, und eine schmale Zone dünnen Materials, die als Scharnierstelle 41 vorgesehen ist, eine in sich geschlossene Linie um die Ausgussöffnung.

Sollbruchstellen sind problemlos, wenn sie von einem Rande eines Materialbereiches zu einem anderen Rande des Materialbereiches reichen oder wenn sie in sich geschlossen sind. Enden sie aber im Innern eines Materialbereiches, wie im vorliegenden Fall, entsteht am Ende der Sollbruchstelle eine Zone, die beim Aufbrechen der Sollbruchstelle zwar deformiert wird, aber nicht brechen soll. Es besteht in dieser Zone immer die Gefahr, dass durch unsorgfältiges Brechen der Sollbruchstelle auch Material unmittelbar ausser-halb der Sollbruchstelle bricht oder durch feine Risse geschwächt wird und dass solche Risse durch weiteren Gebrauch weiter in das Material propagieren.

In anderen Anwendungen werden am Ende von Sollbruchstellen Löcher angebracht, die ein Weiterreissen von der Sollbruchstelle in das Material, das nicht mehr zur Sollbruchstelle gehört, verhindern. Dies ist aber im vorliegenden Falle nicht vorteilhaft, da der sich vom Ausgussteil in den Verschlussteil erstreckende Materialbereich auch eine Dichtfunktion zwischen den beiden Teilen übernehmen soll.

Wie aus der **Figur 10**, die ein vergrössertes Detail der Figur 9 darstellt, ersichtlich ist, weist die erfindungsgemässe Verschlusseinheit in den beiden Sollbruchstellen-Endzonen je eine breitere Zone dünnen Materials (6.1 und 6.2) auf, die während dem Herstellungsprozess für zusätzliche Elastizität und Flexibilität behandelt werden kann. Diese beiden Sollbruchstellen-Endzonen bilden beim Aufbrechen der Sollbruchstelle deren Endpunkte und die Angelpunkte für die Schwenkbewegung des Verschlussteiles. Sie werden beim Aufbrechen der effektiven Sollbruchstelle deformiert, ohne zu reissen. Sie dienen also als Pufferzonen zwischen den bewegten Zonen der Sollbruchstelle und deren unmittelbarer Umgebung und den durch die Sollbruchstelle nicht zu beeinflussenden Materialzonen. Die Sollbruchstellen-Endzonen sind flächig, dünn und, wenn notwendig für erhöhte Elastizität und Flexibilität behandelt.

Die Sollbruchstellen-Endzonen 6.1 und 6.2 messen vorteilhafterweise über ihre Fläche 0,1 bis 1,5mm, in ihrer Dicke 0,05 bis 0,3mm. Sie können dabei eine beliebige Form aufweisen, wobei aber scharfe Ecken vorteilhafterweise vermieden werden.

Die Sollbruchstellen-Endzonen werden bei der Herstellung der Verschlusseinheit gegossen und dann gepresst, wodurch sich die Struktur des Kunststoffes ändert, indem die Makromoleküle gegenüber dem gegossenem Zustand umorientiert werden Die Sollbruchstellen-Endzonen werden in einer ersten Giessstufe des Multimaterialien-Spritzgussverfahrens aus einem Material A in einem Giessspalt zwischen zwei Giessformen gegossen. Dann wird mindestens die eine der Formen durch eine neue ersetzt oder bewegt, derart, dass der Giessspalt für die zweite Giessstufe schmaler ist als bei der ersten Giessstufe. Dadurch wird der Vorspritzling örtlich zusammengepresst, wodurch das Material dünner und die erwünschte Umorientierung der Makromoleküle erreicht wird. Es ist nicht möglich, in der zweiten Giessstufe die zu pressende Stelle mit dem zweiten Material zu umgiessen.

Der Giessspalt für die erste Giessstufe kann im Bereiche der Sollbruchstellenendzonen bis zu ca. 40% breiter als für die zweite Giessstufe sei, sodass die Materialdicke in diesen Zonen durch den Presseffekt der Giessform für die zweite Giessstufe bis zu 40% reduziert wird.

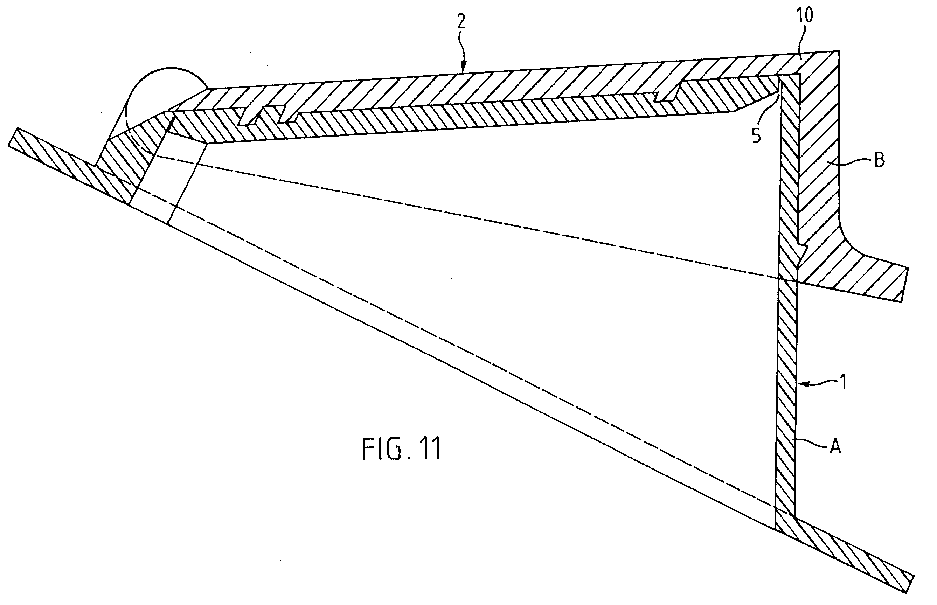

**Figur 11** zeigt eine weitere Ausführungsform der erfindungsgemässen Verschlusseinheit, die nur eine äussere Schutz/Stütz-Zone 10 aufweist und in der, wie im Zusammenhang mit den Figuren 9 und 10 beschrieben, der die Sollbruchstelle aufweisende Bereich aus dem Material A sich rund um die Ausgussöffnung vom Ausgussteil 1 in den Verschlussteil 2 erstreckt. In dieser Ausführungsform erstreckt sich dieser Materialbereich über die ganze Innenoberfläche der Verschlusseinheit.

Eine aus nur einem Material bestehende Innenoberfläche der Verschlusseinheit ist insbesondere vorteilhaft für Anwendungen, in denen die Auswahl von Marterialien beschränkt ist, wie beispielsweise in der Verpackungsindustrie für Lebensmittel, in der für bestimmte Länder gesetzliche Auflagen bestehen, gemäss welchen das Verpackungsgut (hauptsächlich während der Lagerung) nur mit bestimmten Kunststoffen in Berührung kommen darf. Handelt es sich beispielsweise um Milch, so darf diese bspw. nur mit Polyäthylen in Berührung kommen. Ist also in der Ausführungsform gemäss Figur 11 das Marterial A Polyäthylen, ist die Wahl des Materials B trotzdem noch frei.

Weist nun die Verschlusseinheit neben der Scharnierzone 41 (ersichtlich auch aus Figuren 9 und 10), die aus einer schmalen Stelle dünnen Materials besteht, beispielsweise beidseitig davon, wie in der Parallelanmeldung (EP92810955.2, gleiches Anmeldedatum) beschrieben, noch Scharnierteile auf, die aus je einem an den Ausgussteil angeformten Lagerteil und einen an den Verschlussteil angeformten, im Lagerteil begrenzt schwenkbar gelagerten Scharnierteil auf, muss der die Innenoberfläche überdeckende Bereich aus dem Material A in diesen Scharnierbereichen besonders ausgebildet sein.

Dies ist in der **Figur 12** dargestellt. Der an den Ausgussteil 1 angeformte Lagerteil 21 besteht aus dem Material A, der an den Verschlussteil 2 angeformte, im Lagerteil 21 gelagerte Scharnierteil 22 besteht aus dem Material B. Der Bereich des Materials A zieht sich in einer Zone 15 über den beweglich gelagerten Scharnierteil 22 in den Verschlussteil 2. Wird der Verschlussteil 2 zum Öffnen in der Richtung des Pfeiles P bewegt, schwenkt der Scharnierteil 22 Lagerteil 21, wobei die Zone 15 entweder gedehnt wird oder an einer dafür vorgesehenen Stelle (weitere Sollbruchstelle 6) bricht.

Polyaethylen hat bspw. ein Dehnvermögen von ungefähr dem achtfachen der Filmdicke, sodass ein Zone 15 als Dehnzone ausgebildet werden kann. Für weniger dehnbare Kunststoffe ist eine weitere Sollbruchstelle 6 vorzusehen. Gemäss den beiden eingangs genannten Schwerer Patentanmeldungen 2739/91 und 2740/91 werden die Verschlusseinheiten in geschlossenem Zustand hergestellt und auch so, also wird sie auch als Ausführungsform mit weiterer Sollbruchstelle 6 mit intakter Innenschicht in das Gebinde einmontiert. Da die Verschlusseinheit erst bei Gebrauch geöffnet wird, bleibt diese Innenschicht während der ganzen Lagerung unversehrt. Nach dem erstmaligen Öffnen wird im Bereiche der weiteren Sollbruchstelle ein kleiner Spalt zum Material B frei werden, welcher aber oberhalb des auszugiessenden Gutes liegt. Beim Verschliessen der Verschlusseinheit werden die Bruchkanten der Bruchstelle 6 wieder zusammengepresst und verhindern wiederum einen Kontakt des Verpackungsgutes mit dem Material B.

## Patentansprüche

1. Verschlusseinheit aus thermoplastischem Kunststoff für ein Gebinde zur Handhabung und Lagerung von fliessfähigem Gut bestehend aus einem im wesentlichen röhrenförmigen Ausgussteil (1) und einem die Öffnung des Ausgussteils verschliessenden Verschlussteil (2), mit einer linienförmigen Scharnierzone (41) und mit einer linienförmigen Sollbruchstelle (5), **dadurch gekennzeichnet**, dass sie aus mindestens zwei, sich in mindestens einer Eigenschaft unterscheidenden Materialien (A und B) besteht, dass mindestens ein Bereich aus einem Material (A) sich rund um die Ausgussöffnung vom Ausgussteil (1) in den Verschlussteil (2) erstreckt, dass dieser mindestens eine Bereich rund um die Ausgussöffnung eine dünne linienförmige Zone aufweist, von der ein Teil die Scharnierzone (41) bildet und der restliche Teil die Sollbruchstelle (5) bildet, dass die Sollbruchstelle (5) und die Scharnierzone (41) durch Sollbruchstellen-Endzonen (6.1 und 6.2) in Form von flächigen Erweiterungen der dünnen linineförmigen Zone voneinander getrennt sind, dass ein Bereich aus einem weiteren Material (B) derart ausgestaltet ist, dass er in einer Schutz/Stütz-Zone (10) die Sollbruchstelle (5) und mindestens deren unmittelbare Umgebung eng anliegend auf der Innen- oder Aussenseite der Verschlusseinheit überdeckt, auf der Verschlussteilseite der Sollbruchstelle (5) fest mit dem die Sollbruchstelle (5) aufweisenden Bereich verbunden ist und auf der Ausgussteilseite der Sollbruchstelle (5) wenig oder nicht am die Sollbruchstelle (5) aufweisenden Bereich haftet und zusammen mit diesem ein Dichtflächenpaar (13, 14) bildet.

2. Verschlusseinheit nach Anspruch 1, **dadurch gekennzeichnet**, dass die genannte Schutz/Stütz-Zone auf der Aussenseite der Verschlusseinheit angeordnet ist und dass auf der Innenseite der Verschlusseinheit eine weitere Schutz/Stütz-Zone aus demselben Material (B) wie die äussere Schutz/Stütz-Zone (10) oder aus einem anderen Material die Sollbruchstelle (5) und mindestens deren unmittelbare Umgebung überdeckt.

3. Verschlusseinheit nach Anspruch 1, **dadurch gekennzeichnet**, dass auf der Innenseite der Verschlusseinheit eine Stütz-Zone (11), die durch eine Zone eines Bereiches aus einem anderen Material (B) als das Material (A) der Sollbruchstelle (5) gebildet ist, eng an den die Sollbruchstelle (5) aufweisenden Bereich anschliessend und fest mit diesem verbunden verschlussteilseitig wenigstens die unmittelbare Umgebung der Sollbruchstelle (5) bedeckt.

4. Verschlusseinheit nach einem der Ansprüche 1 oder 3, **dadurch gekennzeichnet**, dass auf der Innenseite der Verschlusseinheit eine Stütz-Zone, die durch eine Zone eines Bereiches aus einem anderen Material (B) als das Material (A) der Sollbruchstelle (5) gebildet ist, eng an den die Sollbruchstelle aufweisenden Bereich anschliessend und fest mit diesem verbunden ausgussteilseitig wenigstens die unmittelbare Umgebung der Sollbruchstelle bedeckt.

5. Verschlusseinheit nach einem der Ansprüche 1 bis 4, **dadurch gekennzeichnet**, dass zur festen Verbindung zwischen dem die Sollbruchstelle aufweisenden Bereich und der Schutz/Stütz- oder der Stütz-Zone Formschlussmittel (12) eingesetzt sind.

6. Verschlusseinheit nach einem der Ansprüche 1 bis 4, **dadurch gekennzeichnet**, dass der die Sollbruchstelle aufweisende Bereich durch verschmolzene Oberflächen oder mit Hilfe eines Bindemittels fest mit der Schutz/Stütz-Zone oder mit der Stütz-Zone verbunden ist.

7. Verschlusseinheit nach Anspruch 1, **dadurch gekennzeichnet**, dass die Sollbruchstellen-Endzonen (6.1 und 6.2) über ihre Fläche ein Ausmass von 0,1 bis 1,5mm und eine Dicke von 0,05 bis 0,3mm haben.

8. Verschlusseinheit nach Anspruch 1 oder 7, **dadurch gekennzeichnet**, dass das Material in den Sollbruchstellen-Endzonen (6.1 und 6.2) eine gegenüber anderen Zonen desselben Materials veränderte Struktur aufweist.

9. Verschlusseinheit nach Anspruch 1, **dadurch gekennzeichnet**, dass der Bereich aus dem einen Material A, der die Sollbruchstelle (5) aufweist, sich über die ganze Innenoberfläche der Verschlusseinheit erstreckt.

10. Verschlusseinheit nach Anspruch 9, **dadurch gekennzeichnet**, dass sie ein Scharnier aufweist, das mindestens einen an den Ausgussteil angeformten Lagerteil (21) aus dem einen Material (A) und mindestens einen an den Verschlussteil (1) angeformten, aus einem anderen Material (B) bestehenden, im entsprechenden Lagerteil (21) schwenkbar gelagerten Scharnierteil (22) aufweist und dass eine Zone (15) des Bereiches aus dem Material (A) zwischen dem Lagerteil und dem Verschlussteil als weitere Sollbruchstelle (6) oder als Dehnstelle ausgebildet ist.

11. Herstellungsverfahren zur Herstellung der Verschlusseinheit nach einem der Ansprüche 1 bis 10, **dadurch gekennzeichnet**, dass in einer ersten Giessstufe aus einem ersten Material (A) der die Sollbruchstelle aufweisende Bereich gegossen wird, dass dann die Giessform wenigstens teilweise bewegt oder ersetzt wird und in einer zweiten Giessstufe mit einem zweiten Material (B) die Verschlusseinheit fertig gegossen wird, wobei der Bereich aus dem ersten Material (A) wenigstens teilweise als Giessform benützt wird, und dass in der zweiten Giessstufe Stütz- und/oder Schutz/Stütz-Zonen gegossen werden.

12. Herstellungsverfahren nach Anspruch 11, **dadurch gekennzeichnet**, dass zwischen den zwei Giessstufen wenigstens auf einen Teil der zu übergiessenden Oberflächen des bereits gegossenen Bereiches aus dem ersten Material (A) ein Bindemittel zur festen Verbindung der Oberflächen der beiden Materialien aufgetragen wird.

13. Herstellungsverfahren nach Anspruch 12, **dadurch gekennzeichne**t, dass vor der ersten und der zweiten Giessstufe in einer Giessvorstufe innere Stütz-Zonen gegossen werden.

14. Herstellungsverfahren nach einem der Ansprüche 11 bis 13, **dadurch gekennzeichnet**, dass im Bereiche der Sollbruchstellen-Endzonen die Giessform für die erste Giessstufe und die Giessform für die zweite Giessstufe derart ausgestaltet sind, dass der Giessspalt in der zweiten Giessstufe schmaler ist als in der ersten.

15. Herstellungsverfahren nach Anspruch 14, **dadurch gekennzeichnet**, dass der Giessspalt im Bereiche der Sollbruchstellen-Endzonen in der zweiten Giessstufe bis zu 40% schmaler ist als in der ersten Giessstufe.

## Claims

1. Closure unit made from thermoplastic material for a container for handling and storing free-flowing material, comprising a substantially tubular spout part (1) and a closure part (2) closing the opening of the spout part, having a linear hinge zone (41) and a linear predetermined breaking point (5), characterized in that it comprises at least two materials (A, B) differing with regards to at least one property, that at least one area of one material (A) extends around the spout opening of the spout part (1) into the closure part (2), that said at least one area around the spout opening has a thin, linear zone, whereof one part forms the hinge zone (41) and the remaining part the breaking point (5), that the breaking point (5) and the hinge zone (41) are separated from one another by breaking point end zones (6.1, 6.2) in the form of flat extensions of the thin, linear zone, that one area of a further material (B) is so designed that in a protection/support zone (10) it covers in closely engaging manner the breaking point (5) and at least its immediate environment on the inside or outside of the closure unit, is firmly connected to the area having the breaking point on the closure part side of said breaking point (5) and on the spout part side of the breaking point (5) adheres slightly or not at all to the area having the breaking point (5) and together with the latter forms a sealing surface pair (13, 14).

2. Closure unit according to claim 1, characterized in that said protection/support zone is located on the outside of the closure unit and that on the inside of the closure unit a further protection/support zone of the same material (B) as the outer protection/support zone (10) or from a different material covers the breaking point (5) and at least its immediate environment.

3. Closure unit according to claim 1, characterized in that on the inside of the closure unit, which is formed by a zone of an area of another material (B) as compared with the material (A) of the breaking point (5), closely connects to the area having the breaking point (5) and firmly connected thereto on the closure part side covers at least the direct environment of the breaking point (5).

4. Closure unit according to one of the claims 1 or 3, characterized in that on the inside of the closure unit a support zone formed by a zone of an area from another material (B) as compared with the material (A) of the breaking point (5) is closely connected to the area having the breaking point and is firmly connected thereto on the spout part side at least covering the immediate environment of the breaking point.

5. Closure unit according to one of the claims 1 to 4, characterized in that for the firm connection between the area having the breaking point and the protection/support or support zone, use is made of positive engagement means (12).

6. Closure unit according to one of the claims 1 to 4, characterized in that the area having the breaking point is connected by amalgamated surfaces or with the aid of a binder to the protection/support zone or to the support zone.

7. Closure unit according to claim 1, characterized in that over their surface the breaking point end zones (6.1, 6.2) have an extension of 0.1 to 1.5 mm and a thickness of 0.05 to 0.3 mm.

8. Closure unit according to claim 1 or 7, characterized in that the material in the breaking point end zones (6.1, 6.2) has a different structure compared with other zones of the same material.

9. Closure unit according to claim 1, characterized in that the area of one material (A) having the breaking point (5) extends over the entire inner surface of the closure unit.

10. Closure unit according to claim 9, characterized in that it has a hinge, which is provided with at least one bearing part (21) shaped onto the spout part made from material (A) and at least one hinge part (21), pivotably mounted in the corresponding bearing part (22) and is shaped onto the closure part (1), being made from a different material (B), and that a zone (15) of the area of material (A) between the bearing part and the closure part is constructed as a further breaking point (6) or as an expansion point.

11. Production process for the production of the closure unit according to one of the claims 1 to 10, characterized in that in a first moulding stage the area having the breaking point is moulded from a first material (A), that then the mould is at least partly moved or replaced and then in a second moulding stage with a second material (B) the closure unit is completely moulded, the area of the first material (A) being at least partly used as the mould, and that in the second moulding stage the support and/or protection/support zones are moulded.

12. Production process according to claim 11, characterized in that between the two moulding stages, at least on one part of the surfaces to be moulded over of the already moulded area of the first material (A) is applied a binder for the firm connection of the surfaces of the two materials.

13. Production process according to claim 12, characterized in that prior to the first and second moulding stages, in a preliminary moulding stage inner support zones are moulded.

14. Production process according to one of the claims 11 to 13, characterized in that in areas of the breaking point end zones, the mould for the first moulding stage and the mould for the second moulding stage are so designed that the moulding gap in the second stage is narrower than in the first.

15. Production process according to claim 14, characterized in that the moulding gap in the vicinity of the breaking point end zones in the second moulding stage is up to 40% narrower than in the first moulding stage.

## Revendications

1. Dispositif obturateur en matière thermoplastique pour récipient destiné à la manipulation et au stockage de produits liquides, constitué d'un élément verseur (1), de forme sensiblement tubulaire, et d'un élément obturateur (2) fermant l'ouverture de l'élément verseur, comportant une zone charnière linéaire (41) et un point de prérupture linéaire (5), caractérisé en ce que ce dispositif est constitué d'au moins deux matières (A et B ), de propriétés différentes, en ce qu'au moins une partie faite en une matière (A) s'étend tout autour de l'orifice verseur de l'élément verseur (1) pour aboutir dans l'élément obturateur (2), en ce qu'au moins une partie tout autour de l'orifice verseur présente une zone linéaire mince dont une partie constitue la zone charnière (41) et la partie restante le point de prérupture (5), en ce que ledit point de prérupture (5) et ladite zone charnière (41) sont séparés par des zones terminales de prérupture (6.1 et 6.2) présentant la forme d'élargissements plats de la zone linéaire mince, en ce qu'une partie est réalisée en une autre matière (B) de telle sorte que cette partie recouvre le point de prérupture (5) dans une zone de protection et de renfort (10) ainsi qu'au moins son environnement immédiat en s'appliquant étroitement sur la face interne ou externe du dispositif obturateur, ladite partie en matière (B) étant reliée de manière fixe, sur le côté de l'élément obturateur du point de prérupture (5), à la partie qui présente ce point de prérupture (5), tandis que sur le côté de l'élément verseur du point de prérupture elle n'adhère pas, ou peu, à la partie présentant ce point de prérupture (5) et forme, ensemble avec cette partie, une paire (13, 14) de faces d'étanchéité.

2. Dispositif obturateur selon la revendication 1, caractérisé en ce que la zone de protection/renfort mentionnée est disposée sur le côté extérieur du dispositif obturateur et en ce que, sur le côté intérieur du dispositif obturateur, une autre zone de protection/renfort faite dans la même matière (B) que la zone extérieure de protection/renfort (10), recouvre le point de prérupture (5) et au moins son environnement immédiat.

3. Dispositif obturateur selon la revendication 1, caractérisé en ce que, sur le côté intérieur du dispositif obturateur, une zone de protection (11) qui est constituée par une zone d'une partie faite d'une autre matière (B) que la matière (A) du point de prérupture (5), recouvre au moins l'environnement immédiat dudit point de prérupture (5), en se raccordant étroitement à la zone présentant ce point (5) et à laquelle elle est solidement reliée du côté de l'élément obturateur.

4. Dispositif obturateur selon l'une des revendications 1 ou 3, caractérisé en ce que, sur le côté intérieur du dispositif obturateur, une zone de renfort constituée en une matière (B) différente de la matière (A) du point de prérupture (5), recouvre au moins l'environnement immédiat du point de prérupture, tout en se raccordant étroitement à la zone présentant ce point de prérupture à laquelle elle est solidement reliée du côté de l'élément verseur.

5. Dispositif obturateur selon l'une des revendications 1 à 4, caractérisé en ce que, pour réaliser la liaison solide entre la zone présentant le point de prérupture et la zone de protection/renfort ou de renfort/protection, des moyens d'ajustement géométriques (12) sont mis en place .

6. Dispositif obturateur selon l'une des revendications 1 à 4, caractérisé en ce que la liaison solide entre la zone où se trouve le point de prérupture et la zone de protection/renfort ou la zone de renfort est assurée par la fusion des surfaces ou à l'aide d'un produit adhésif.

7. Dispositif obturateur selon la revendication 1, caractérisé en ce que les zones terminales de prérupture (6.1 et 6.2) ont une dimension superficielle comprise entre 0,1 et 1,5 mm et une épaisseur comprise entre 0,05 et 0,3 mm.

8. Dispositif obturateur selon la revendication 1 ou la revendication 7, caractérisé en ce que la matière des zones terminales de prérupture (6.1 et 6.2) présente une structure modifiée par rapport à celle des autres zones faites dans la même matière.

9. Dispositif obturateur selon la revendication 1, caractérisé en ce que la zone faite dans l'une des matières (A), qui présente le point de prérupture (5), s'étend sur toute la surface intérieure du dispositif obturateur.

10. Dispositif obturateur selon la revendication 9, caractérisé en ce qu'il présente une charnière qui est composée d'au moins d'un élément d'appui moulé sur l'élément verseur, réalisé dans la matière (A), et d'au moins un élément charnière (22) monté de manière pivotante dans ledit élément d'appui (21), moulé sur l'élément obturateur (1) et réalisé en une autre matière (B), et en ce qu'une zone (15) de la partie réalisée dans la matière (A) et située entre l'élément d'appui et l'élément obturateur est prévue pour servir de point de prérupture complémentaire (6) ou de zone de dilatation .

11. Procédé de fabrication du dispositif obturateur conforme à l'une des revendications 1 à 10, caractérisé en ce que, au cours d'une première étape de moulage, s effectue la coulée dans un moule de la partie faite en une première matière (A) et présentant le point de prérupture, en ce que ce moule est déplacé ensuite au moins partiellement ou bien remplacé, et au cours d'une deuxième étape s'effectue le moulage du dispositif obturateur en une deuxième matière (B), tandis que la partie faite dans la première matière (A) est utilisée, au moins partiellement, pour servir de moule et en ce que, au cours de la deuxième étape s'effectue le moulage des zones de renfort et/ou de protection/renfort.

12. Procédé de fabrication selon la revendication 11, caractérisé en ce que, entre les deux étapes de moulage, on applique, au moins sur une partie des surfaces à recouvrir des zones déjà moulées dans la première matière (A), un produit adhésif destiné à assurer la liaison solide entre les surfaces des deux matières.

13. Procédé de fabrication selon la revendication 12, caractérisé en ce que, avant la première et la deuxième étapes de moulage, s'effectue, au cours d'une étape préliminaire, le moulage des zones de renfort intérieures.

14. Procédé de fabrication selon l'une des revendications 11 à 13, caractérisé en ce que, au voisinage des zones terminales de prérupture, le moule destiné à la première étape de moulage et celui destiné à la deuxième étape de moulage sont conformés de telle sorte que pendant la deuxième étape, l'interstice de coulée est plus étroit que pendant la première.

15. Procédé de fabrication selon la revendication 14, caractérisé en ce que, dans la partie des zones terminales de prérupture, l'interstice de coulée pendant la deuxième étape est plus étroit dans une proportion allant jusqu'à 40% par rapport à la première étape.
